# EUROPÄISCHE PATENTSCHRIFT

(11) **EP 1 747 716 B1**
(45) Veröffentlichungstag und Bekanntmachung des Hinweises auf die Patenterteilung: **21.05.2008**
(21) Anmeldenummer: 06014929.1
(22) Anmeldetag: 18.07.2006
(51) Int. Cl.: A01K 1/015

(54) **Betonfertigteilesystem für einen Stallboden, Verfahren zur Herstellung eines Stallbodens, Stallboden und ein den Stallboden umfassender Stall**
Prefabricated concrete elements system for a stable floor, method for manufacturing the same and stable floor comprising said elements
Système d'éléments préfabriqués en béton pour un sol d'étable, procédé pour sa fabrication et sol d'étable comprenant lesdits éléments

(30) Priorität: 25.07.2005 DE 102005034670
(43) Veröffentlichungstag der Anmeldung: 31.01.2007
(73) Patentinhaber: Hartmann Grundbesitz GmbH & Co. KG, 92265 Edelsfeld (DE)
(72) Erfinder: Hartmann, Hans, 92265 Edelsfeld (DE)
(74) Vertreter: Böhm, Thomas

(56) Entgegenhaltungen:
- EP-A- 1 364 576
- EP-A- 1 673 971

## Beschreibung

Die vorliegende Erfindung betrifft ein Betonfertigteilesystem für einen Stallboden, ein Verfahren zur Herstellung eines Stallbodens, den Stallboden und einen diesen Stallboden umfassenden Stall.

Es ist bekannt, einen Stallboden mit mindestens einem Laufgang und Liegemulden für Tiere, insbesondere Rinder, unter Verwendung von Fertigbetonteilen herzustellen. Damit kann ein Stall vorteilhaft schnell gebaut werden. Dies ist zum Beispiel aus der Offenlegungsschrift DE 101 09 811 A1 von Hartmann bekannt. Der Laufgang eines solchen Stalls wird aus Beton gegossen. Zuvor wurden Laufgänge auch aus Gussasphalt hergestellt, doch ist dieser nicht so lange haltbar wie ein Betonboden und kostenintensiver. Der Einsatz eines Laufgangs, der aus vergossenem Beton hergestellt, also betoniert wird, hat den Vorteil, dass er undurchlässig ist für Flüssigkeiten, insbesondere den Harn und die Fäkalien, die von den Tieren abgeschieden werden. Außerdem ist eine solche gegossene Betonplatte stabil, um von einem Fahrzeug befahren werden zu können. Der Laufgang eines Stalls wird regelmäßig mit einem Fahrzeug befahren, zum Beispiel einem Einstreuwagen. Andererseits besitzt das Betonieren des Laufgangs den Nachteil, dass dieser Vorgang gegenüber einem Verlegen von Fertigbetonteilen länger dauert und aufwändiger ist mit mehr Arbeitsschritten. Ein betonierter Laufgang hat außerdem den Nachteil, dass die Oberfläche nach dem Betonieren schnell glatt wird. Bei Ställen mit Böden aus herkömmlich vergossenem Beton wird dieses Problem noch dadurch verstärkt, dass schon nach kurzer Zeit des Betriebs, d.h. schon nach drei bis vier Jahren, wegen der Beanspruchung mit Harnsäure aus dem von den Tieren abgeschiedenen Harn, der Betonboden noch glatter wird. Eine glatte Oberfläche eines Laufgangs hat den großen Nachteil, dass sich viele Tiere in dem Stall nur vorsichtig und mit kleinen Schritten über den Laufgang bewegen. Dies kann zu Ängstlichkeit bei den Tieren führen, sowie zur reduzierter Nahrungsaufnahme, da sich die Tiere ängstlich und weniger oft von der Liegemulde zum Futtertisch bewegen. Der Fleischertrag und/oder die Milchproduktion können darunter stark leiden. Außerdem kann es zu Lahmheit und stiller Brunst bei diesen Tieren führen, was ebenso nachteilig für die Gesundheit der Tiere und den Ertrag von diesen Tieren ist. Darüber hinaus kann es bei Tieren in der Brunst dazu kommen, dass sie ihre Vorsichtigkeit ablegen und sich zu schnell über den glatten Boden bewegen. Daher besteht die Gefahr, dass solche Tiere auf dem glatten Boden ausrutschen und sich Knochenbrüche zuziehen, insbesondere Bein- und Hüftbrüche, so dass diese Tiere notgeschlachtet werden müssen. Einen durch Vergießen von Beton hergestellten glatten Boden griffig zu machen, ist jedoch aufwändig, insbesondere zeit- und kostenintensiv. Es wurde daher dazu übergegangen, einen Laufgang aus Betonfertigplatten herzustellen, die einen stabilen Laufgang bilden, der dicht mit den Liegemulden als Liegeboxenfertigbetonteile verbunden werden kann und so auf die Tiere angepasst ist, dass sich diese nicht an dem Boden verletzen können. Dies ist aus den Patenten von Hartmann mit den Nummern DE 10 2004 050 100 B3, DE 10 2004 061 547 B3 und DE 10 2004 061 546 B3 bekannt. Mit den darin beschriebenen Verfahren zur Herstellung eines Stallbodens können ein Stallboden und ein einen solchen Stallboden umfassender Stall besonders schnell hergestellt werden, wobei diese Stallböden selbst besonders dicht und tiergerecht sind, da sich die Tiere sicher darauf bewegen können und Verletzungen weitgehend vermieden werden können. In der Praxis hat sich jedoch herausgestellt, dass die Kosten zur Herstellung solcher Stallböden durch den Transport vieler Fertigbetonteile erhöht werden, insbesondere, wenn die Fertigbetonteile über große Strecken transportiert werden müssen. Ferner ist die Variabilität des Stallbodens eingeschränkt.

Die Aufgabe der vorliegenden Erfindung ist es daher, die Nachteile aus dem Stand der Technik zu vermeiden, insbesondere sollen die Transportkosten bei der Herstellung eines Stalls mit einem vorteilhaften Stallboden gesenkt werden, insbesondere soll ein noch variabler zu gestaltender Stall mit einem dafür umrüstbaren Stallboden bereit gestellt werden, um die Anwendungsmöglichkeiten eines Stalls insbesondere auf veränderte Verhältnisse der Struktur der zu züchtenden Tiere zu verbessern.

Diese Aufgabe wird durch das Verfahren zur Herstellung eines Stallbodens nach Anspruch 1, das Betonfertigteilesystem für einen Stallboden nach Anspruch 14, den Stallboden nach Anspruch 24 bzw. 25 und den Stall nach Anspruch 26 gelöst.

Weitere vorteilhafte Ausführungsformen finden sich in den jeweiligen Unteransprüchen.

Erfindungsgemäß wird ein Verfahren zur Herstellung eines Stallbodens mit mindestens einem Laufgang und Liegemulden bereit gestellt, wobei Laufgangplatten zur Ausbildung des mindestens einen Laufgangs verlegt werden, wobei die Laufgangplatten jeweils eine Erhebung an einem Rand aufweisen. Ferner werden Stege verlegt, die an die Erhebungen der Laufgangplatten stoßen, wobei die Erhebungen und die Stege Seitenwände der Liegemulden bilden, die neben dem Laufgang angeordnet werden. Weiterhin wird der Boden der Liegemulden und die den Erhebungen gegenüberliegenden Seitenwände der Liegemulden betoniert. Damit wird mit Ausnahme der Stege zu einem wesentlichen Teil auf den Einsatz von Fertigbetonteilen für die Herstellung von Liegemulden verzichtet. Damit können die Transportkosten zur Herstellung eines Stalls, insbesondere eines Stallbodens, erheblich gesenkt werden, da die Liegemulden im Wesentlichen vor Ort betoniert werden und für die Liegemulden nur die oben beschriebenen Stege sowie die Laufgangplatten als Fertigbetonteile angeliefert werden müssen. Darüber hinaus können die erfindungsgemäßen Laufgangplatten zur Ausbildung des mindestens einen Laufgangs die aus den oben genannten Patenten von Hartmann bekannten vorteilhaften Eigenschaften aufweisen, d.h. eine griffige Oberfläche und eine vorteilhafte feste Verbindbarkeit, sodass die Laufgangplatten des mindestens einen Laufgang so dicht und fest miteinander verbunden werden können, dass der mindestens eine Laufgang mit einem Fahrzeug befahren werden kann und im Wesentlichen gegenüber Flüssigkeiten dicht ist. Außerdem kann durch den Einsatz von Laufgangplatten eine Oberfläche auf einem Laufgang bzw. den Laufgängen bereitgestellt werden, auf der sich die Tiere sicher bewegen können ohne große Gefahr eines Ausrutschen oder einer Verletzung der Klauen. Bei einer besonders vorteilhaften Ausgestaltung der vorliegenden Erfindung können die Stege nach dem Betonieren des Bodens der Liegemulden und der den Erhebungen der Laufgangplatten gegenüber liegenden Seitenwände der Liegemulden verlegt und somit auch nachträglich wieder entfernt und erneut eingebaut werden, um die Breite von Liegemulden variabel gestalten zu können. Bei einer noch weiteren vorteilhaften Ausführungsform der Erfindung können die Stege nach dem Betonieren des Bodens der Liegemulden verlegt werden. Vorteilhaft kann dann an die auf dem betonierten Boden der Liegemulden verlegten Stege auf einfache Weise eine Verschalung angebracht werden, und dann können die den Erhebungen der Laufgangplatten gegenüber liegenden Seitenwände der Liegemulden betoniert werden. Auch bei dieser Ausführungsform können die Stege nachträglich wieder entfernt und erneut eingebaut werden, um die Breite von Liegemulden variabel gestalten zu können. Damit können der Stall und die Liegeflächen der Liegemulden leicht verändert werden, so dass der Struktur einer sich veränderten Gruppe oder Herde von Tieren Rechnung getragen werden kann, ohne einen neuen Stall bauen zu müssen und eine tiergerechte Haltung der Tiere gewährleisten zu können. Die Variabilität des Stalls wird dadurch vorteilhaft erhöht. Wenn eine größere Zahl von Jungtieren oder kleineren Tieren gehalten wird, können die Abstände zwischen den oben genannten Stegen leicht verkleinert werden, sodass in dem gleichen Stall mehr dieser Tiere untergebracht werden können. Diese Tiere werden in den Liegemulden auch tiergerechter gehalten, da so die Breite der Liegemulden an die geringere Größe der Tiere angepasst werden kann. Umgekehrt können bei fortschreitendem Wachstum der Tiere die Abstände zwischen den Stegen wieder vergrößert werden, um die Breite der Liegemulden an die größer werdenden Tiere anpassen zu können.

Für die Ausbildung der Liegemulden mit den Stegen ist es besonders vorteilhaft, dass die Laufgangplatten eine Erhebung aufweisen, an welche die Stege stoßen können, um Seitenwände der Liegemulden bilden zu können. Besonders vorteilhaft werden zum Betonieren der den Erhebungen gegenüber liegenden Seitenwände der Liegemulden Verschalungen eingesetzt, die durch Abstandshalter fixiert werden, die in den Erhebungen vorgesehenen Befestigungseinrichtungen befestigt werden können. Damit kann besonders vorteilhaft erreicht werden, dass die den Erhebungen gegenüber liegenden Seitenwände der Liegemulden in einem vorher bestimmten Abstand betoniert werden und die ebenfalls vorher bereits gefertigten Stege als Fertigbetonteile ohne Anpassungsarbeiten einfach und leicht an der Baustelle des Stalls eingesetzt werden können. Damit wird auch gewährleistet, dass die Stege nachträglich wieder ausgebaut und an anderen Stellen leicht wieder eingebaut werden können. Besonders vorteilhaft kann der dazu benötigte Abstandshalter in den gleichen Befestigungseinrichtungen in den Erhebungen fixiert werden, die auch vorgesehen sind, um später die Stege, die an die Erhebungen stoßen, zu befestigen. Bei einer besonders vorteilhaften Ausgestaltung der Erfindung wird als Abstandshalter eine Rohrstange verwendet, die durch einen ersten Durchgang einer ersten Verschalung und durch einen zweiten Durchgang einer zweiten Verschalung geschoben werden kann. Besonders vorteilhaft ist die Befestigungseinrichtung in der Erhebung als eine Ausnehmung mit einem Innengewinde ausgestaltet, und der als Rohrstange ausgebildete Abstandshalter weist ein passendes Gewinde auf, so dass die Rohrstange in die Befestigungseinrichtung der Erhebung eingeschraubt werden kann. Besonders vorteilhaft kann ein weiteres Rohr als weiterer Abstandshalter zwischen der ersten und zweiten Verschalung über die Rohrstange geschoben werden. Die Verschalungen werden dann besonders vorteilhaft an der Rohrstange fixiert, indem Keile in Schlitze eingebracht werden, die an der Rohrstange vorgesehen sind, um die Verschalungen mit dem weiteren Rohr dazwischen in einem definierten Abstand von den Erhebungen der Laufgangplatten zu fixieren.

Bei einer noch bevorzugteren Ausführungsform der Erfindung werden zum Betonieren der den Erhebungen gegenüber liegenden Seitenwände der Liegemulden Verschalungen eingesetzt, die an den Stegen angeordnet werden, die selbst als Abstandshalter dienen. Dazu wird zuerst der Boden der Liegemulden betoniert, und dann werden darauf die Stege verlegt. Vorteilhaft weisen die Erhebungen der Laufgangplatten Ausnehmungen auf, in die Vorsprünge der Stege eingreifen. Bei einer weiteren vorteilhaften Ausführungsform weisen die Erhebungen der Laufgangplatten Vorsprünge auf, die in Ausnehmungen der Stege eingreifen. Besonders vorteilhaft sind die Erhebungen der Laufgangplatten mit einer Vielzahl solcher Ausnehmungen bzw. Vorsprünge versehen, sodass der Abstand von benachbarten Stegen und somit die Liegemuldenfläche dazwischen auf einfache Art und Weise gestaltet und auch nachträglich wieder verändert werden kann. Ferner kann auch so vorteilhaft erreicht werden, dass die den Erhebungen gegenüber liegenden Seitenwände der Liegemulden in einem vorher bestimmten Abstand betoniert werden und die ebenfalls vorher bereits gefertigten Stege als Fertigbetonteile ohne Anpassungsarbeiten einfach und leicht an der Baustelle des Stalls eingesetzt werden können. Damit wird auch gewährleistet, dass die Stege nachträglich wieder ausgebaut und an anderen Stellen leicht wieder eingebaut werden können.

Bei einer weiteren Ausführungsform der vorliegenden Erfindung weisen die Stege Bewehrungen an ihrer dem Unterboden, auf den sie verlegt werden, zugewandten Seite auf. Damit können die Stege besonders sicher und fest in dem Boden der Liegemulden fixiert werden. Bei einer besonders vorteilhaften Ausgestaltung des Verfahrens der vorliegenden Erfindung werden zwischen und/oder unter benachbarten solchen Stegen mit Bewehrungen Stahlmatten verlegt. Auf diese Stahlmatten kann jedoch auch verzichtet werden. Bei einer weiteren Ausführungsform kann Faserbeton verwendet werden, um den Boden der Liegemulden und/oder die den Erhebungen gegenüberliegenden Seitenwände der Liegemulden zu betonieren.

Das Betonieren des Bodens der Liegemulden erfolgt dann dadurch, dass auf den Unterboden eine Betonschicht aufgebracht wird, die den Boden der Liegemulden zwischen den Stegen und den Erhebungen bildet.

Bei einer weiteren Ausgestaltung des erfindungsgemäßen Verfahrens können die Laufgangplatten an den die Erhebungen aufweisenden Rändern ebenfalls Bewehrungen aufweisen, die in den Boden der Liegemulden nach dem Betonieren dieses Bodens der Liegemulden in diesen hineinragen.

Besonders bevorzugt weisen die Laufgangplatten an den die Erhebungen aufweisenden Rändern Ausnehmungen auf, in die beim Betonieren des Bodens der Liegemulden Beton eindringt. Auf diese Weise können die Laufgangplatten nach einer besonders vorteilhaften Ausgestaltung des erfindungsgemäßen Verfahrens besonders fest untereinander verbunden werden. Außerdem sind die Laufgangplatten und damit der Laufgang, den sie bilden sicher und fest mit den daneben angeordneten Liegemulden verbunden.

Zur Durchführung des erfindungsgemäßen Verfahrens der vorliegenden Erfindung wird daher erfindungsgemäß auch ein Betonfertigteilesystem für einen Stallboden bereit gestellt, das Laufgangplatten aus Beton für mindestens einen Laufgang umfasst, wobei die Laufgangplatten jeweils eine Erhebung an einem Rand aufweisen. Außerdem umfasst ein solches Betonfertigteilesystem Stege, die zusammen mit den Erhebungen, an die sie nach einem Verlegen stoßen, Seitenwände von Liegemulden für Tiere bilden.

Besonders vorteilhaft weisen die Stege an ihrer dem Unterboden, auf den sie verlegt werden, zugewandten Seite Bewehrungen auf, so dass sie besonders fest mit dem Boden der Liegemulden verbunden werden können. Bei einer weiteren Ausgestaltung eines erfindungsgemäßen Betonfertigteilesystems weisen die Erhebungen Befestigungseinrichtungen auf, an denen Abstandshalter für Verschalungen befestigbar sind. Bei einer weiteren besonders vorteilhaften Ausführungsform des Betonfertigteilesystems der vorliegenden Erfindung sind die Stege an den Befestigungseinrichtungen befestigbar. Besonders vorteilhaft sind die Stege selbst die Abstandshalter. Dazu werden die Stege nach dem Betonieren des Bodens der Liegemulden auf den Boden der Liegemulden verlegt. Besonders vorteilhaft weisen die Erhebungen der Laufgangplatten Befestigungseinrichtungen auf, die in der Form von Ausnehmungen oder Vorsprüngen ausgebildet sind. Die Stege weisen dann entsprechend Vorsprünge oder Ausnehmungen auf, sodass die Vorsprünge der Stege in die Ausnehmungen der Erhebungen eingreifen und/oder die Vorsprünge der Erhebungen in die Ausnehmungen der Stege eingreifen. Damit können die Stege auch nachträglich wieder ausgebaut und an anderen Stellen an den zahlreich vorgesehenen Befestigungseinrichtungen befestigt werden. Bei einer besonders vorteilhaften Ausgestaltung sind die Stege zusätzlich an den den Erhebungen gegenüber liegenden Seitenwänden der Liegemulden an weiteren Befestigungseinrichungen befestigbar. Dazu können die Stege Vorsprünge und/oder Ausnehmungen aufweisen, die in Ausnehmungen und/oder Vorsprünge der den Erhebungen gegenüber liegenden Seitenwänden eingreifen.

Besonders vorteilhaft können die bei dem Verfahren zur Herstellung des Stallboden eingesetzten Verschalungen Vorsprünge und/oder Ausnehmungen aufweisen, die nach dem Betonieren der den Erhebungen gegenüber liegenden Seitenwände der Liegemulden komplementäre Ausnehmungen und/oder Vorsprünge bilden.

Ferner stellt die vorliegende Erfindung einen Stallboden bereit, der nach einem der oben beschriebenen Verfahren erhältlich ist bzw. ein oben beschriebenes Betonfertigteilesystem umfasst.

Dadurch wird erfindungsgemäß auch ein besonders variabler und vorteilhafter Stall bereit gestellt, der zu niedrigeren Kosten hergestellt werden kann und während der Nutzung auch variabel umgebaut werden kann, um insbesondere Änderungen in der Struktur einer Herde oder der gehaltenen Tiere darin Rechnung tragen zu können.

Die Liegemulden sind für Tiere, insbesondere Rinder, eingerichtet.

Im Folgenden wird die Erfindung anhand von Zeichnungen näher erläutert. Es zeigt:
- Figur 1: ein erfindungsgemäßes Betonfertigteilesystem in einer Perspektivansicht;
- Figur 2: eine Perspektivansicht gemäß Figur 1 mit mehreren der dort gezeigten Elementen und weiteren Einzelheiten;
- Figur 3: eine schematische Draufsicht auf ein zum Teil verlegtes erfindungsgemäßes Betonfertigteilesystem;
- Figur 4: die Draufsicht gemäß Figur 3 in vergrößerter Darstellung;
- Figur 5: einen schematischen Querschnitt durch einen erfindungsgemäßen Stallboden in einer späteren Verfahrensstufe als Figur 4;
- Figur 6: einen Querschnitt gemäß der Linie VI-VI in Figur 5;
- Figur 7: eine Perspektivansicht eines erfindungsgemäßen Stallbodens vor einem Betonieren der den Erhebungen der Laufgangplatten gegenüber liegenden Seitenwände von Liegemulden;
- Figur 8: einen schematischen Querschnitt durch einen erfindungsgemäßen Stallboden in einer noch späteren Verfahrensstufe als Figur 5;
- Figur 9: eine weitere Ausführungsform einer Laufgangplatte eines erfindungsgemäßen Betonfertigteilesystems in Perspektivansicht;
- Figur 10: die Perspektivansicht gemäß Figur 8 mit einem bereits betonierten Boden der Liegemulden, die neben dem Laufgang angeordnet werden;
- Figur 11: die Perspektivansicht des Betonfertigteilesystems gemäß Figur 9 mit befestigten Abstandshaltern und Verschalungen zum Betonieren der den Erhebungen der Laufgangplatten gegenüber liegenden Seitenwände von Liegemulden;
- Figur 12: eine Detailansicht einer ersten Verschalung gemäß Figur 11;
- Figur 13: eine Detailansicht einer zweiten Verschalung gemäß Figur 11 in Perspektivansicht;
- Figur 14: das Betonfertigteilesystem gemäß Figuren 11 bis 13 mit einer der Erhebung der Laufgangplatten gegenüber liegenden betonierten Seitenwand der Liegemulden mit Abstandshalter und Verschalungen;
- Figur 15: die Ausführungsform gemäß Figur 14 ohne Abstandshalter und Verschalungen;
- Figur 16: ein erfindungsgemäßes Betonfertigteilesystem gemäß Figur 15, wobei ein Steg verlegt ist, der mit der Erhebung der Laufgangplatte und der der Erhebung gegenüber liegenden Seitenwand befestigt ist;
- Figur 17: eine Detailansicht des Betonfertigteilesystem gemäß Figur 16, die eine bevorzugte Befestigung des Stegs in einer betonierten Wand veranschaulicht;
- Figur 18: eine Laufgangplatte eines bevorzugten erfindungsgemäßen Betonfertigteilesystems.
- Figur 19: eine weitere Ausführungsform einer Laufgangplatte eines erfindungsgemäßen Betonfertigteilesystems in Perspektivansicht;
- Figur 20: die Perspektivansicht gemäß Figur 19 mit einem betonierten Boden für Liegemulden, die neben dem Laufgang angeordnet werden;
- Figur 21: die Perspektivansicht des Betonfertigteilesystems gemäß Figur 20 mit auf dem Boden verlegten Stegen;
- Figur 22: die Perspektivansicht des Betonfertigteilesystems gemäß Figur 21 mit einer an den Stegen als Abstandshalter angeordneten Verschalung;
- Figur 23: die Perspektivansicht des Betonfertigteilesystems gemäß Figur 22 mit den betonierten Seitenwänden der Liegemulden;
- Figur 24: die Perspektivansicht des Betonfertigteilesystems gemäß Figur 23, bei dem die Verschalung entfernt ist;
- Figur 25: die Perspektivansicht eines Betonfertigteilesystems gemäß Figur 23, wobei zwei hintereinanderverlegte Laufgangplatten gezeigt sind, die einen Laufgang bilden;
- Figur 26: eine Detailansicht des Betonfertigteilesystem gemäß Figur 25, die eine bevorzugte Befestigung des Stegs auf dem betonierten Boden veranschaulicht;
- Figur 27: eine Detailansicht des Betonfertigteilesystem gemäß Figur 25, die eine bevorzugte Befestigung des Stegs mit der Erhebung der Laufgangplatte veranschaulicht; und
- Figur 28: eine Draufsicht des Betonfertigteilesystem gemäß Figur 27.

In den verschiedenen Figuren sind entsprechende Bauteile, Elemente und Gegenstände im Allgemeinen mit gleichen Bezugszeichen versehen.

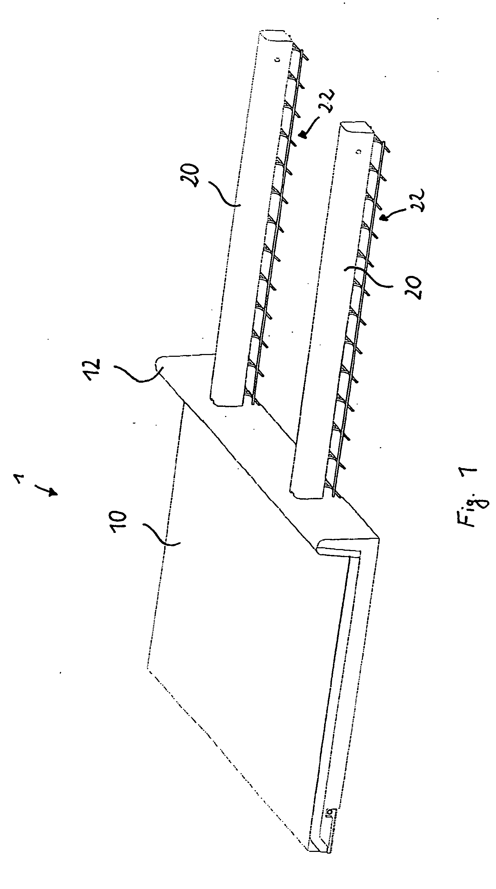

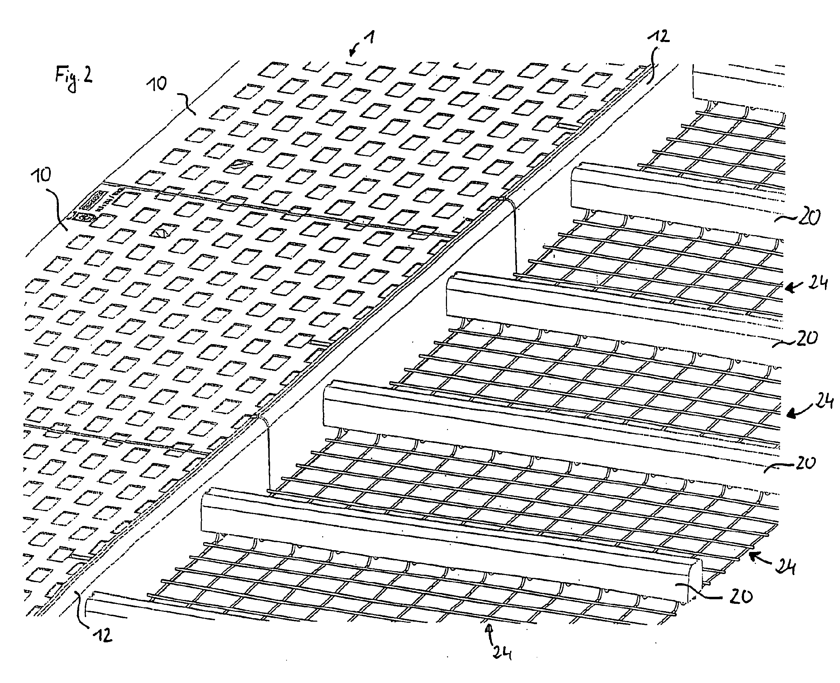

Die Figur 1 zeigt ein erfindungsgemäßes Betonfertigteilesystem für einen Stallboden, das eine Laufgangplatte 10 aus Beton für mindestens einen Laufgang 1 umfasst, wobei die Laufgangplatte eine Erhebung 12 an einem Rand aufweist. Ferner umfasst das Betonfertigteilesystem Stege 20, die zusammen mit den Erhebungen 12, an die sie nach einem Verlegen stoßen, Seitenwände von Liegemulden bilden, die neben dem Laufgang angeordnet werden. Die Stege 20 weisen an ihrer dem Unterboden, auf den sie verlegt sind, zugewandten Seite die Bewehrungen 22 auf. Mehrere hintereinander verlegte Laufgangplatten können den mindestens einen Laufgang 1 eines erfindungsgemäßen Stallbodens bilden. Dies ist in der Figur 2 gezeigt.

In der Figur 2 sind drei hintereinander verlegte Laufgangplatten 10 teilweise zu sehen, die den mindestens einen Laufgang 1 eines erfindungsgemäßen Stallbodens bilden. Die Laufgangplatten 10 weisen jeweils eine Erhebung 12 an einem Rand auf. Neben dem Laufgang sind die Stege 20 verlegt, die an die Erhebungen 12 der Laufgangplatten 10 stoßen. Die Erhebungen 12 und die Stege 20 bilden bei einem fertiggestellten Stallboden die Seitenwände der Liegemulden, die neben dem Laufgang 1 angeordnet sind. Zwischen benachbarten Stegen 20 sind die Stahlmatten 24 verlegt. Diese Stahlmatten 24 können entweder nur zwischen benachbarten Stegen 20 verlegt werden oder auch unter den Stegen 20, sodass sie im Wesentlichen durchgehend ohne Unterbrechungen in dem Boden 40 angeordnet sind.

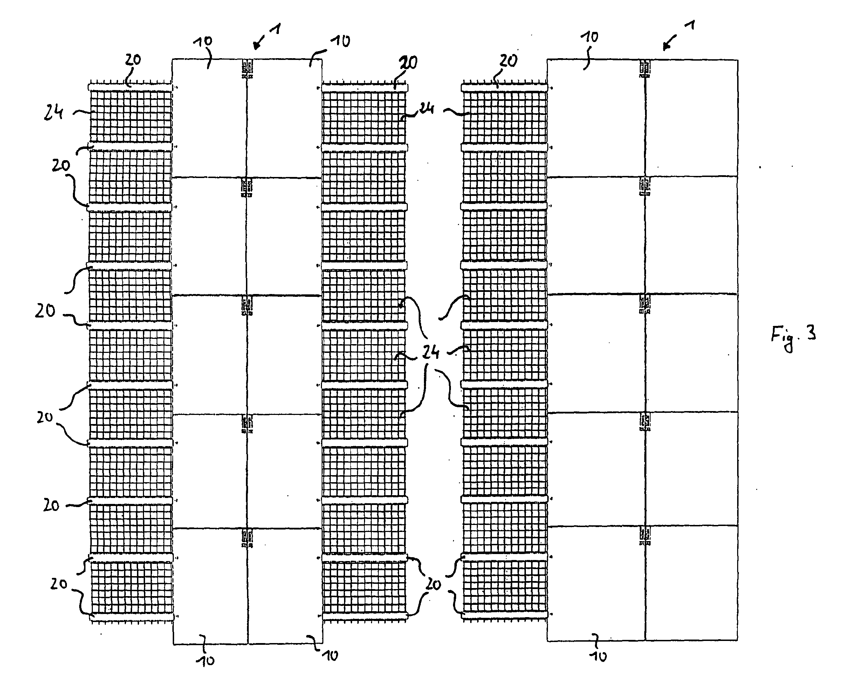

Die Figur 3 zeigt eine schematische Draufsicht auf ein zum Teil verlegtes erfindungsgemäßes Betonfertigteilesystem. Dieses Betonfertigteilesystem umfasst die Laufgangplatten 10, die jeweils Erhebungen an einem Rand aufweisen, wie in den Figuren 1 und 2 gezeigt. Neben den Laufgangplatten 10, die in der Figur 3 zwei Laufgänge 1 bilden, sind die Stege 20 im Wesentlichen in einem rechten Winkel zu den Laufgangplatten 10 verlegt und stoßen an die Erhebungen der Laufgangplatten 10. Die Stege 20 sind also derart ausgebildet, dass sie nach dem Verlegen, im Grundriss gesehen, im Wesentlichen in einem rechten Winkel an die Erhebungen der Laufgangplatten 10 stoßen. Unter bzw. zwischen benachbarten Stegen 20 sind die Stahlmatten 24 verlegt.

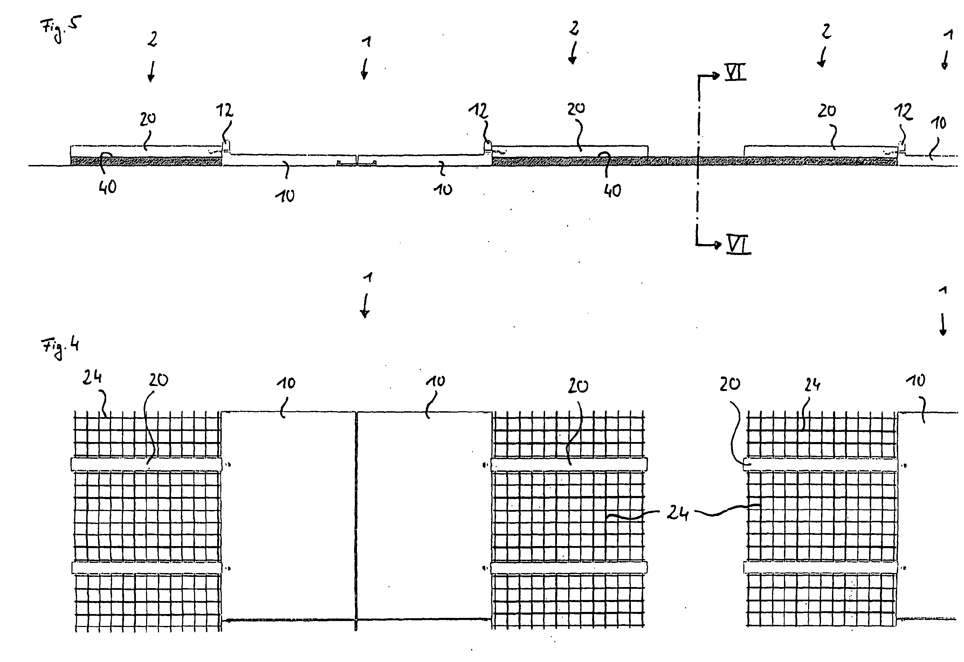

Die Figur 4 zeigt einen Ausschnitt aus der Figur 3 in vergrößerter Darstellung.

Die Figur 5 zeigt einen Querschnitt durch einen erfindungsgemäßen Stallboden, wobei bereits ein Boden 40 der Liegemulden, die neben den Laufgängen 1 angeordnet sind, betoniert ist.

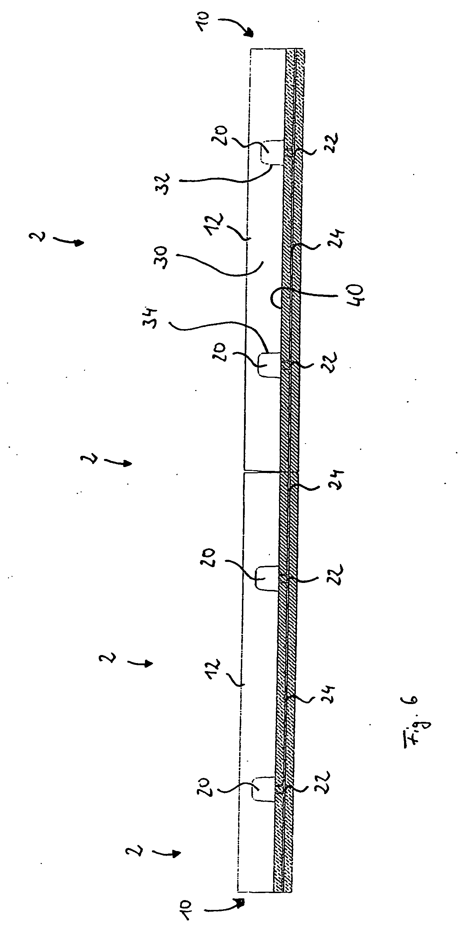

Die Figur 6 zeigt einen Querschnitt gemäß der Linie VI-VI der Figur 5. In der Figur 6 wird mit den Bezugszeichen 2 auf die Liegemulden hingewiesen, von denen durch die Stege 20 und die Erhebung 12 der Laufgangplatten jeweils drei Seitenwände und der Boden 40 der Liegemulden ausgebildet ist.

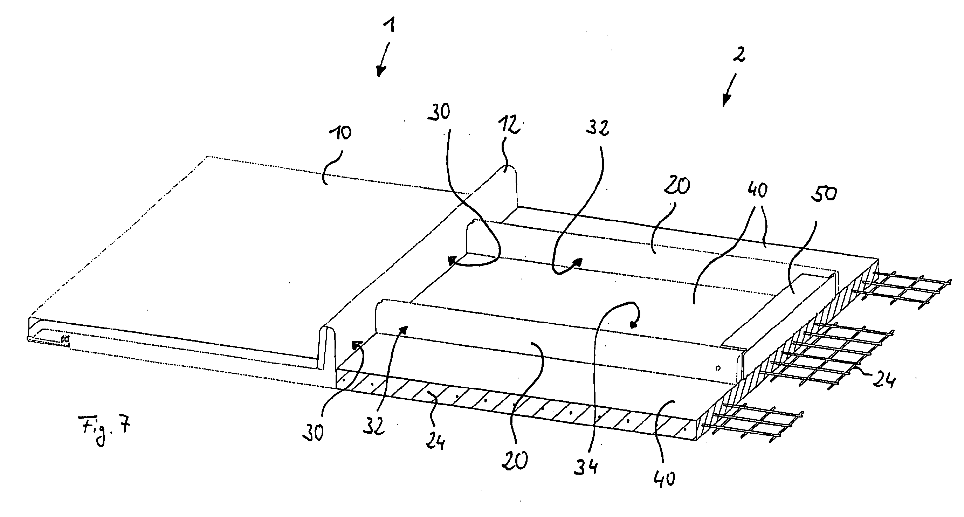

In der Figur 7 ist eine Perspektivansicht eines erfindungsgemäßen Stallbodens aus einem erfindungsgemäßen Betonfertigteilesystem gezeigt, bei dem der Boden 40 der Liegemulde 2 bereits betoniert ist. Die Liegemulde 2 weist die Seitenwände 30, 32 und 34 auf. Die Seitenwand 30 wird durch die Erhebung 12 der Laufgangplatte 10 gebildet. Die Seitenwände 32 und 34 werden durch die Stege 20 gebildet. Der Seitenwand 30 gegenüber ist eine Verschalung 50 angeordnet, mit deren Hilfe die der Seitenwand 30 gegenüber liegende Seitenwand der Liegemulde betoniert wird. Die schon in den Figuren 2 und 3 gezeigten Bewehrungen 24 sind zwischen den Stegen 20 verlegt, sie können aber auch durchgehend unter den Stegen 20 verlegt werden, sodass sie in dem Boden 40 gleichmäßig ohne Unterbrechungen angeordnet sind.

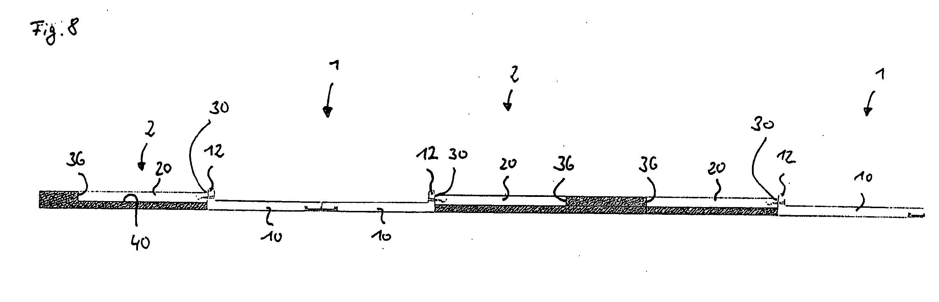

In der Figur 8 ist ein Querschnitt durch einen erfindungsgemäßen Stallboden gezeigt, bei dem die der Seitenwand 30 der Liegemulde 2 gegenüber liegende Seitenwand 36 betoniert ist.

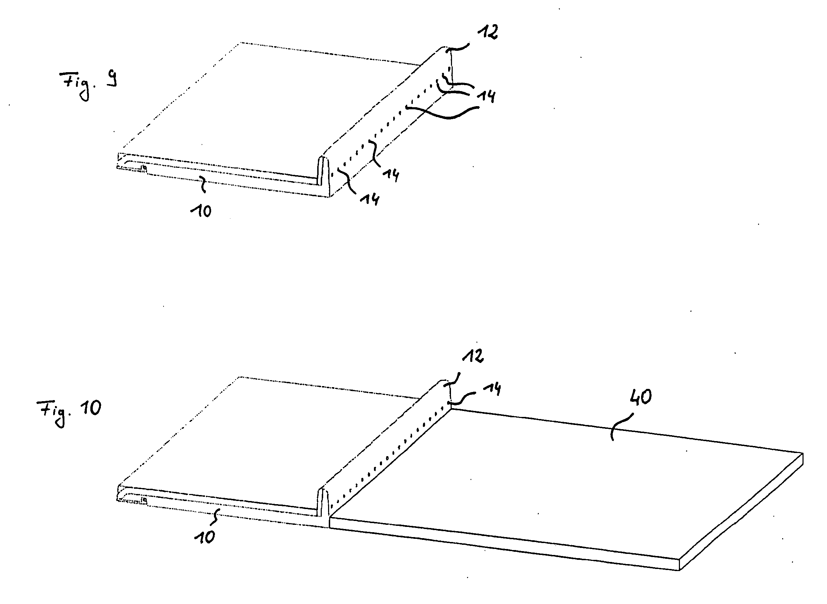

Die Figur 9 zeigt ein Betonfertigteilesystem einer weiteren Ausführungsform der Erfindung, wobei die Erhebung 12 der Laufgangplatte 10 die Befestigungseinrichtungen 14 aufweist. An diesen Befestigungseinrichtungen 14 kann ein Abstandshalter für Verschalungen befestigt werden. Wie in der Figur 9 gezeigt, können die Befestigungseinrichtungen 14 Ausnehmungen sein. Besonders vorteilhaft weisen diese Ausnehmungen 14 ein Innengewinde auf. Die Befestigungseinrichtungen 14 können in beliebigem Abstand voneinander in der Erhebung 12 vorgesehen sein. Je kleiner der Abstand zwischen den Befestigungseinrichtungen 14 ist, umso variabler kann die Breite einer Liegemulde gestaltet werden, da bei einer besonders vorteilhaften Ausführungsform der vorliegenden Erfindung Stege des erfindungsgemäßen Betonfertigteilesystems ebenfalls in diesen Befestigungseinrichtungen 14 befestigt werden können.

Die Figur 10 zeigt in Perspektivansicht die Laufgangplatte gemäß Figur 9 mit einem daneben betonierten Boden 40 für darauf zu bildende Liegemulden.

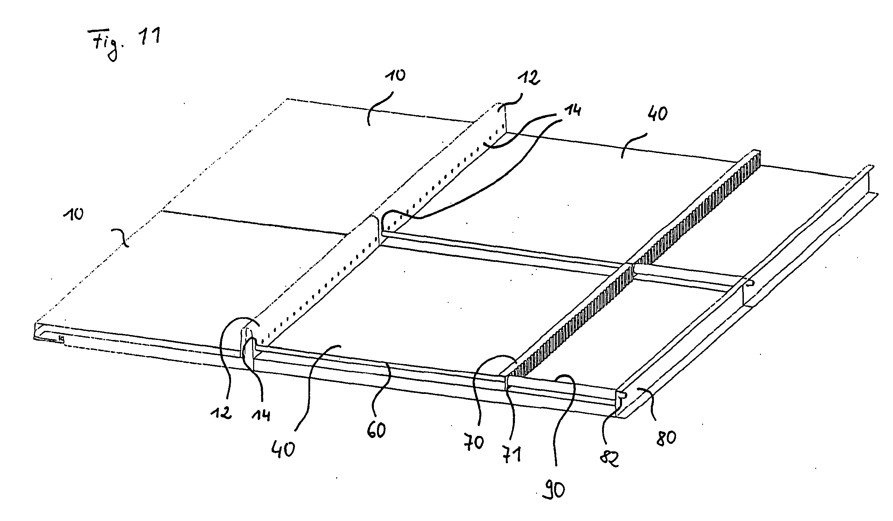

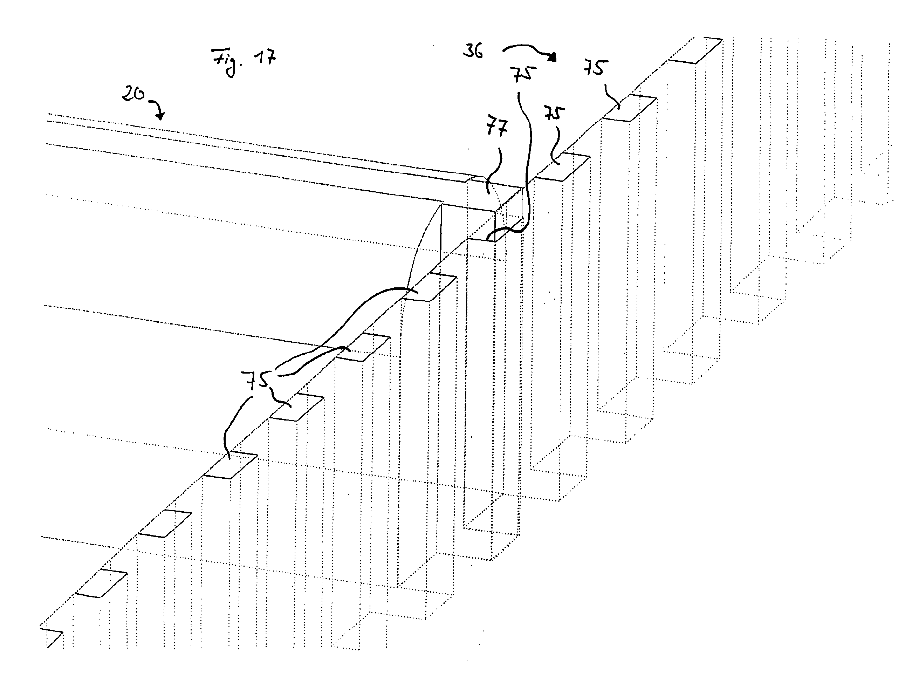

Die Figur 11 zeigt zwei hintereinander verlegte Laufgangplatten 10, die den mindestens einen Laufgang eines erfindungsgemäßen Stallbodens bilden. Die Laufgangplatten 10 weisen jeweils die Erhebungen 12 auf. Daneben ist, wie in der Figur 10, der Boden 40 bereits betoniert. Für eine bevorzugte gute Verbindung der Laufgangplatten 10 mit dem Boden 40 können unterhalb der Befestigungseinrichtungen 14 Bewehrungen 26 (in Figur 17 gezeigt) vorgesehen sein, die aus den Laufgangplatten 10 herausragen und in den Boden 40 hineinragen. In einer der Befestigungseinrichtungen 14 der Laufgangplatten 10 ist die Rohrstange 60 befestigt. Besonders vorteilhaft weist die Rohrstange 60 an dem Ende, mit dem sie mit der Befestigungseinrichtung 14 der Laufgangplatte 10 befestigt ist, ein Gewinde auf, das in ein entsprechendes Innengewinde der Befestigungseinrichtung 14 hineingeschraubt werden kann. Die Rohrstange 60 ist durch einen ersten Durchgang 71 der ersten Verschalung 70 und durch den zweiten Durchgang 82 der zweiten Verschalung 80 geschoben. Als weiterer Abstandshalter ist das weitere Rohr 90 zwischen der ersten Verschalung 70 und der zweiten Verschalung 80 über die Rohrstange 60 geschoben.

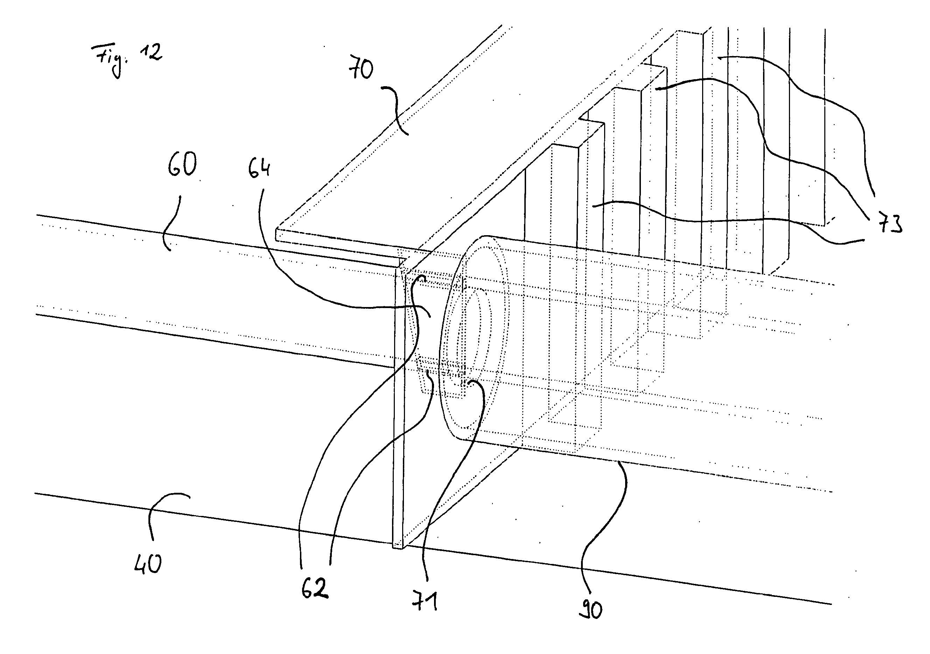

Die Figur 12 zeigt eine Detailansicht der ersten Verschalung 70 der Figur 11. In dieser vergrößerten Darstellung ist zu sehen, wie die Rohrstange 60 durch den Durchgang 71 der Verschalung 70 geschoben ist. Über die Rohrstange 60 ist das weitere Rohr 90 geschoben, das als Abstandhalter zwischen den Verschalungen 70 und 80 dient, wie in Figur 11 gezeigt. Zur sicheren und genauen Befestigung der Verschalung 70 in einem genau definierten Abstand zur Erhebung 12 der Laufgangplatte 10, in der die Rohrstange 60 eingeschraubt ist, ist der Schlitz 62 in der Rohrstange 60 vorgesehen. In den Schlitz 62 ist ein Keil 64 eingeschoben. Dadurch wird der Abstand der Verschalung 70 zu der Erhebung 12 der Laufgangplatte 10 festgelegt. Durch das weitere Rohr 90 als Abstandhalter zwischen den Verschalungen 70 und 80 wird der Abstand zwischen den Verschalungen 70 und 80 festgelegt, wie in Figur 11 gezeigt. Die Verschalung 70 weist die Vorsprünge 73 auf. Nach einem Einfüllen von Beton zwischen die Verschalungen 70 und 80 hinterlassen die Vorsprünge 73 nach dem Entfernen der Verschalung 70 Ausnehmungen in der der Erhebung 12 gegenüber liegenden Seitenwand der Liegemulde. Bei einer weiteren Ausführungsform können in der Verschalung 70 Ausnehmungen vorgesehen sein, die nach einem Einfüllen von Beton und dem Verfestigen desselben sowie Entfernung der Verschalung 70 in der der Erhebung 12 gegenüber liegenden Seitenwand der Liegemulde entsprechende Vorsprünge zurücklassen.

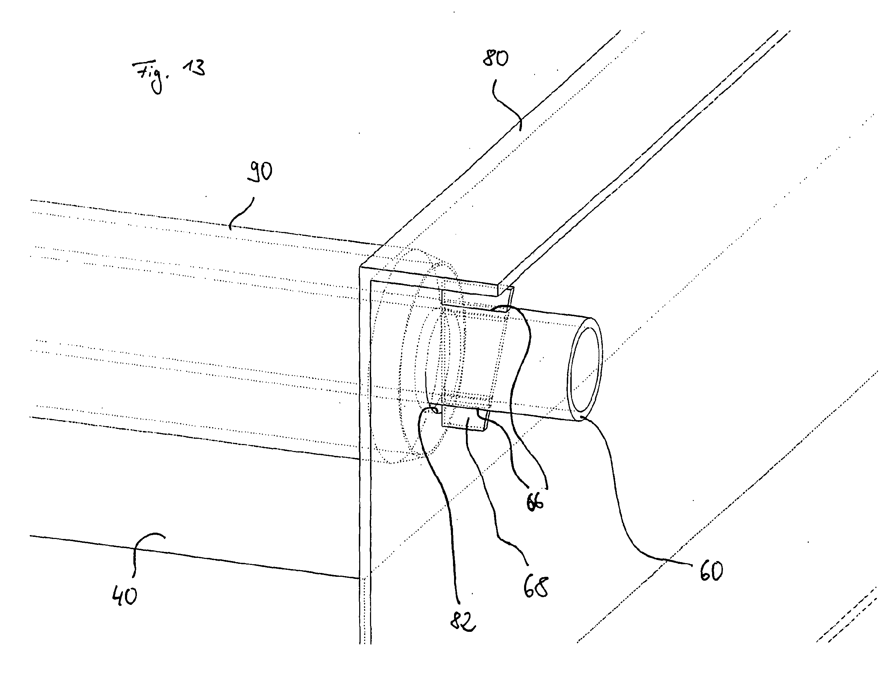

Die Figur 13 zeigt eine Detailansicht der zweiten Verschalung 80 der Figur 11 in Perspektivansicht. Das weitere Rohr 90 definiert zusammen mit dem in der Rohrstange 60 vorgesehen Schlitz 66, in den der Keil 68 eingeschoben ist, den Abstand zwischen den Verschalungen 70 und 80.

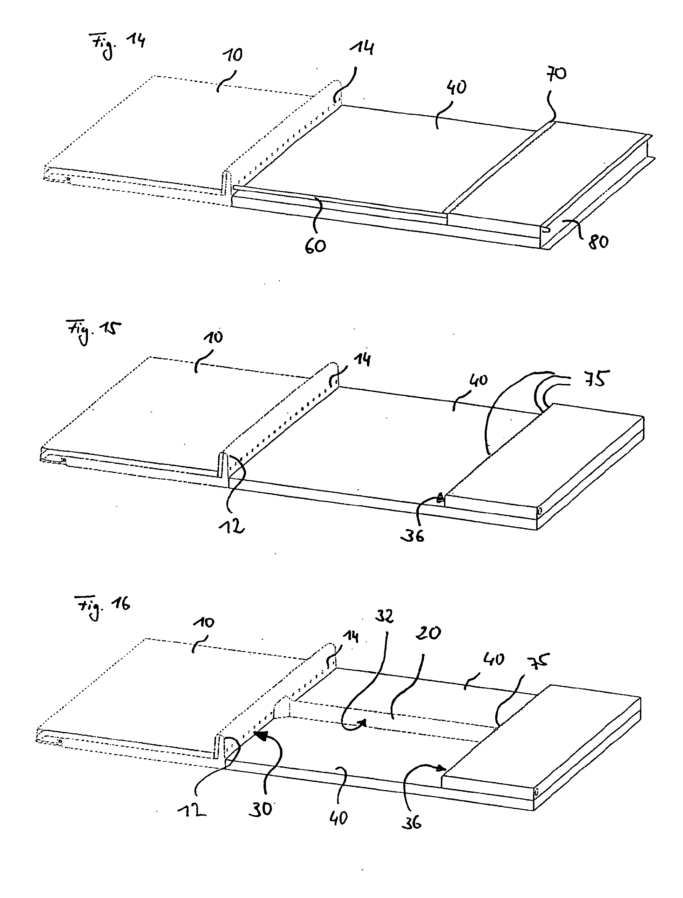

Die Figur 14 zeigt das Betonfertigteilesystem der Figuren 11 bis 13, wobei Beton zwischen die Verschalungen 70 und 80 gegossen ist.

Die Figur 15 zeigt den Teil eines erfindungsgemäßen Stallbodens gemäß Figur 14, wobei die Verschalung 70 und 80 sowie die Rohrstange 60 als Abstandshalter entfernt ist. Durch die in den Figuren 11 bis 13 beschriebene Ausgestaltung des Abstandhalters kann dieser leicht entfernt werden.

Nach dem Entfernen der Verschalung 70 weist die der Erhebung 12 gegenüber liegende Seitenwand 36 ein zu den Vorsprüngen 73 der Verschalung 70 komplementäres System von Ausnehmungen 75 auf.

Die Figur 16 zeigt einen erfindungsgemäßen Stallboden, bei dem ein Steg 20 etwa im rechten Winkel zur Laufgangplatte 10 angeordnet ist und mit Schrauben in den Befestigungseinrichtungen 14 in der Erhebung 12 befestigt ist sowie mit Vorsprüngen in den in der Seitenwand 36 vorgesehen Ausnehmungen 75. Die Vorsprünge des Stegs 20, die in die Ausnehmungen 75 der Seitenwand 36 eingreifen, können bei einer weiteren Ausführungsform komplementär zu dieser Ausführungsform ausgebildet sein. Das heißt, dass in der Seitenwand 36 Vorsprünge vorgesehen sind, die in Ausnehmungen des Stegs 20 eingreifen. Der Steg 20 kann leicht wieder ausgebaut werden und in andere Befestigungseinrichtungen 14 und andere Ausnehmungen 75 der Seitenwand 36 befestigt werden, so dass die Breite von Liegemulden mit den Seitenwänden 30, 32, 36 sehr variabel gestaltet werden kann.

Die Figur 17 zeigt eine Detailansicht des Betonfertigteilesystem gemäß Figur 16. Von dem Steg 20 ist insbesondere der Vorsprung 77 gezeigt, der in eine der Ausnehmungen 75 der Seitenwand 36 eingreift. Die obere Kante der Seitenwand 36 ist leicht abgeschrägt. Diese Abschrägung und die Ausnehmungen 75 der Seitenwand werden durch eine entsprechende Abschrägung und Vorsprünge 73 der Verschalung 70 geschaffen. Anstelle des einen Vorsprungs 77 können auch mehrere solcher Vorsprünge vorgesehen sein, die in mehrere der Ausnehmungen 75 eingreifen. Bei einer weiteren Ausgestaltung der Erfindung sind anstelle des Vorsprungs 77 bzw. mehrerer solcher Vorsprünge eine oder mehrere Ausnehmung(en) in dem Steg 20 vorgesehen, in die ein oder mehrere Vorsprünge der Seitenwand 36 eingreifen. Der Vorsprung oder die Vorsprünge des Stegs 20, die in die Ausnehmungen 75 der Seitenwand 36 eingreifen, können also komplementär zu der gezeigten Ausführungsform ausgebildet sein. Das heißt, dass in der Seitenwand 36 Vorsprünge vorgesehen sein können, die in Ausnehmungen des Stegs 20 eingreifen. Der Steg 20 kann bei beiden dieser Ausführungsformen leicht nach dem Betonieren der Seitenwand 36 ein- aber auch wieder ausgebaut werden in die Befestigungseinrichtungen 14 und die Ausnehmungen 75 bzw. Vorsprünge der Seitenwand 36, die als weitere Befestigungseinrichtungen dienen, sodass die Breite von Liegemulden zwischen benachbarten Stegen 20 sehr leicht verstellt und variabel gestaltet werden kann. Die Befestigung der Stege 20 in den Befestigungseinrichtungen 14 der Laufgangplatten 10 kann vorzugsweise mit Schrauben erfolgen aber auch durch ein Einsetzen von Bolzen. Durch die Ausgestaltung, dass der Steg 20 in der Seitenwand 36 leicht durch Eingriff fixiert werden kann, ermöglicht diese Ausführungsform, dass eine Befestigung dort besonders vorteilhaft ohne Werkzeuge erfolgen kann.

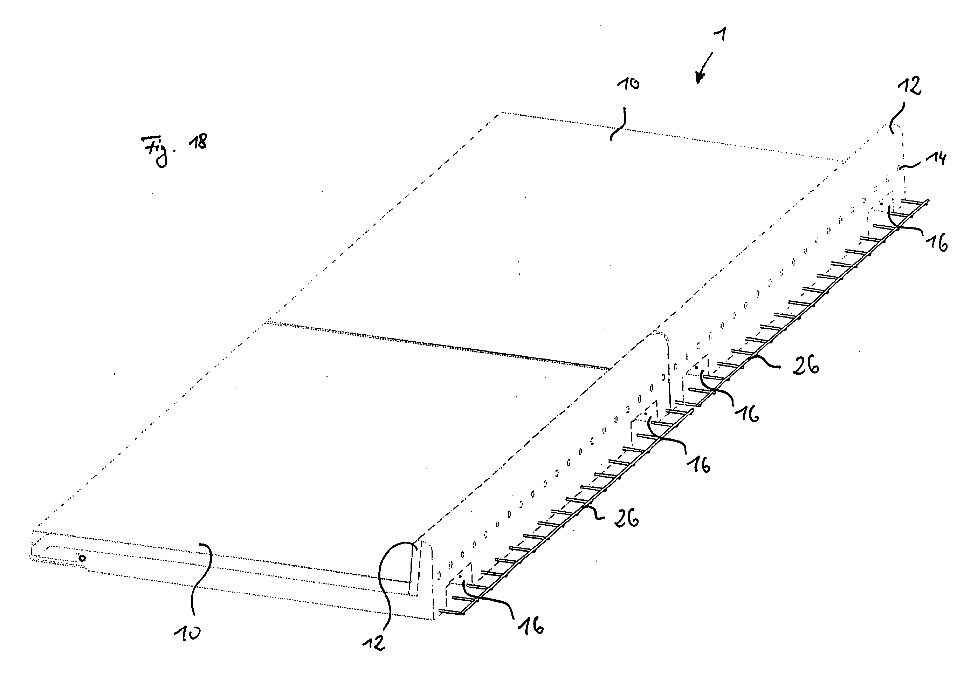

Die Figur 18 zeigt eine besonders vorteilhafte Ausgestaltung eines erfindungsgemäßen Betonfertigteilesystems, wobei die Laufgangplatten 10 an den die Erhebungen 12 aufweisenden Rändern Ausnehmungen 16 aufweisen zur Aufnahme von Beton des Bodens 40 der Liegemulden. Auf diese Weise können die Laufgangplatten 10 nach einer besonders vorteilhaften Ausgestaltung des erfindungsgemäßen Verfahrens besonders fest untereinander verbunden werden. Außerdem sind die Laufgangplatten 10 und damit der Laufgang 1, den sie bilden, sicher und fest mit den daneben angeordneten Liegemulden verbunden.

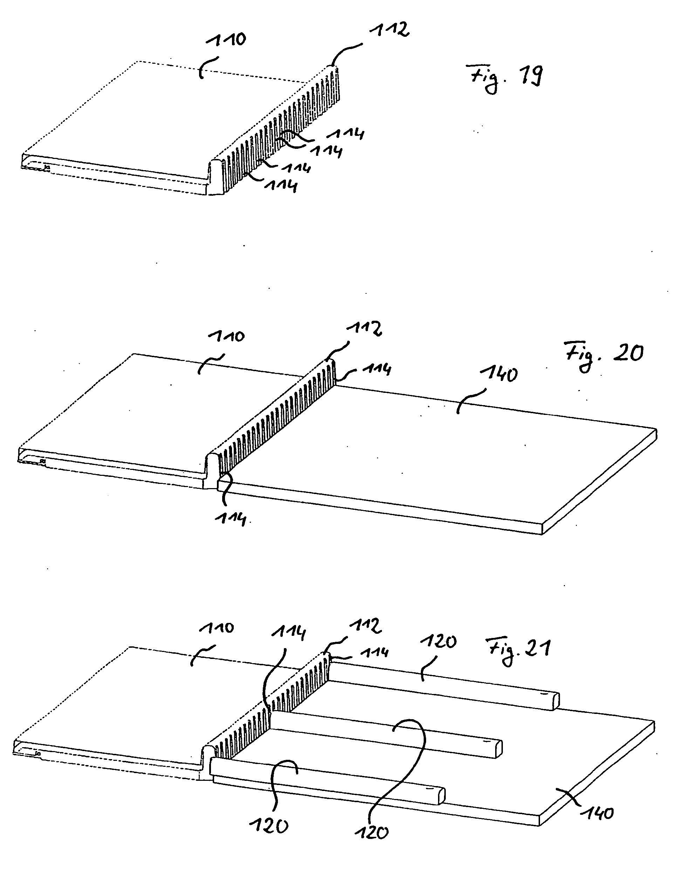

Die Figur 19 zeigt ein Betonfertigteilesystem einer weiteren Ausführungsform der Erfindung, wobei die Erhebung 112 der Laufgangplatte 110 die Befestigungseinrichtungen 114 aufweist. Die Befestigungseinrichtungen 114 sind als Ausnehmungen in der Erhebung 112 ausgebildet. Diese Ausnehmungen 114 sind besonders vorteilhaft als Schlitze ausgebildet. Die Befestigungseinrichtungen 114 können in beliebigem Abstand voneinander in der Erhebung 112 vorgesehen sein. Je kleiner der Abstand zwischen den Befestigungseinrichtungen 114 ist, umso variabler kann die Breite einer Liegemulde gestaltet werden, da bei einer besonders vorteilhaften Ausführungsform der vorliegenden Erfindung Stege des erfindungsgemäßen Betonfertigteilesystems in diesen Befestigungseinrichtungen 114 befestigt werden können.

Die Figur 20 zeigt in Perspektivansicht die Laufgangplatte gemäß Figur 19 mit einem daneben betonierten Boden 140 für darauf zu bildende Liegemulden. Besonders vorteilhaft kann der betonierte Boden 140 in die Schlitze der Befestigungseinrichtungen 114 eindringen und so eine besonders stabile und feste Verbindung des Bodens 140 mit der Laufgangplatte 110 bewirken.

Die Figur 21 zeigt in Perspektivansicht die Laufgangplatte 110 mit dem daneben betonierten Boden 140 gemäß Figur 19, wobei nun Stege 120 auf dem Boden verlegt sind. Die Stege 120 sind derart ausgebildet, dass sie nach dem Verlegen, im Grundriss oder in der Draufsicht gesehen, im Wesentlichen in einem rechten Winkel an die Erhebungen der Laufgangplatten 110 stoßen. Für eine noch bessere Verbindung der Laufgangplatten 110 mit dem Boden 140 können unterhalb der Befestigungseinrichtungen 114 Bewehrungen 26 (in Figur 17 gezeigt) vorgesehen sein, die aus den Laufgangplatten 110 herausragen und in den Boden 140 hineinragen.

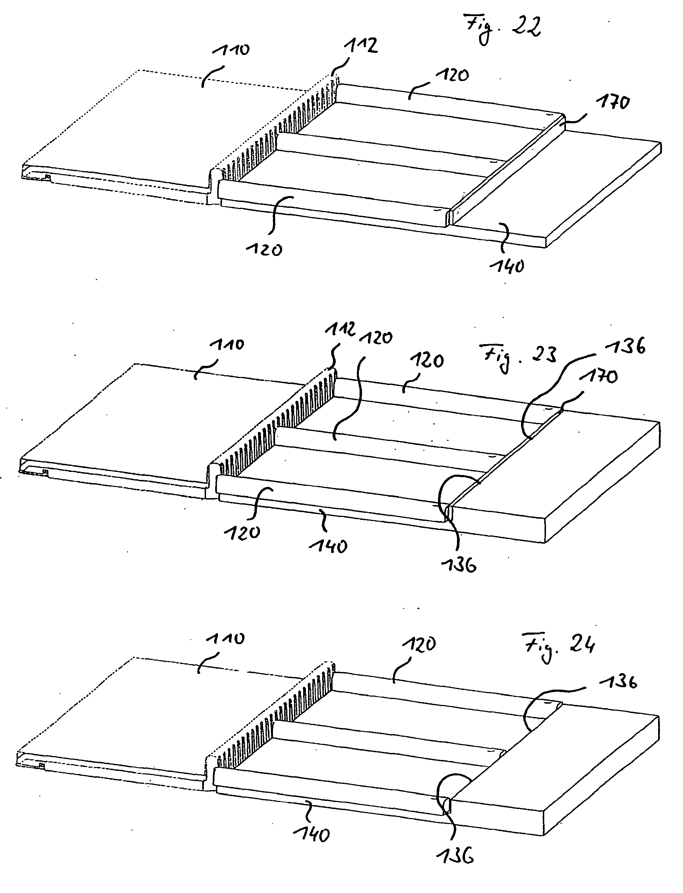

Die Figur 22 zeigt in Perspektivansicht die Laufgangplatte 110 mit dem daneben betonierten Boden 140 und darauf verlegten Stegen 120 gemäß Figur 21. An die Stege 120, die selbst als Abstandshalter dienen, ist auf einfache Weise die Verschalung 170 angeordnet. Die Verschalung 170 ist ein ganz einfaches Brett. Sie kann aber auch eine Verschalung ähnlich zu der sein, die in den Figuren 11 und 12 gezeigt ist und die dort gezeigten Vorsprünge 73 aufweist.

Die Figur 23 zeigt in Perspektivansicht die Laufgangplatte 110 mit dem daneben betonierten Boden 140, den darauf verlegten Stegen 120 und der an den Stegen 120 angeordneten Verschalung 170 gemäß Figur 22. Ferner sind nun die der Erhebung 112 der Laufgangplatte 110 gegenüberliegenden Seitenwände 136 der Liegemulden 102 betoniert.

Die Figur 24 zeigt in Perspektivansicht die Laufgangplatte 110 mit dem daneben betonierten Boden 140, den darauf verlegten Stegen 120 und den der Erhebung der Laufgangplatte 110 gegenüberliegenden betonierten Seitenwände 136 der Liegemulden 102 gemäß Figur 23. Die in Figur 23 noch gezeigte, an den Stegen 120 angeordnete, Verschalung 170 ist nun entfernt.

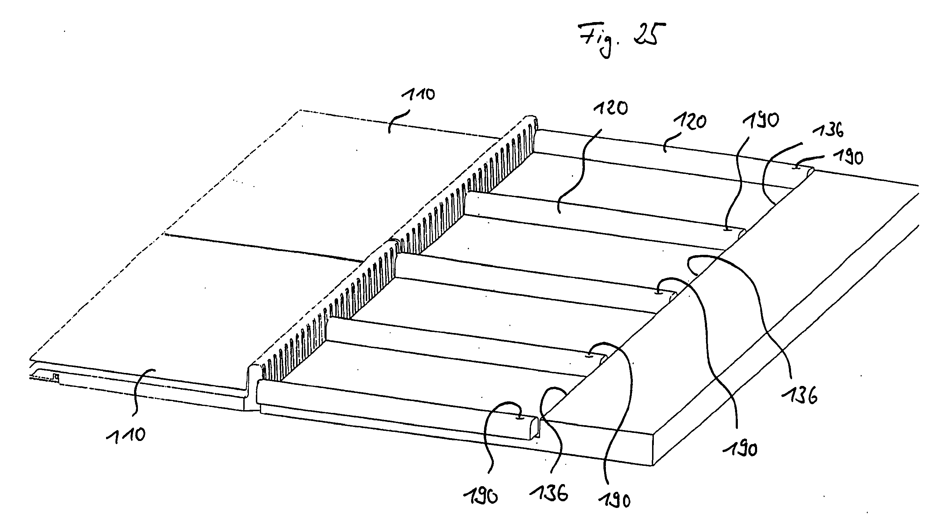

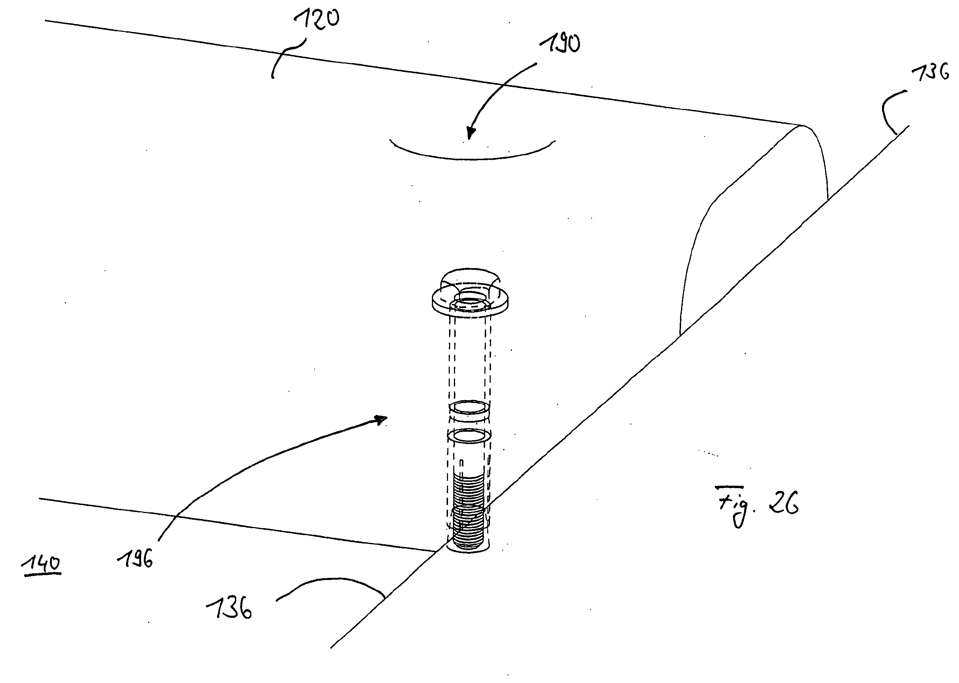

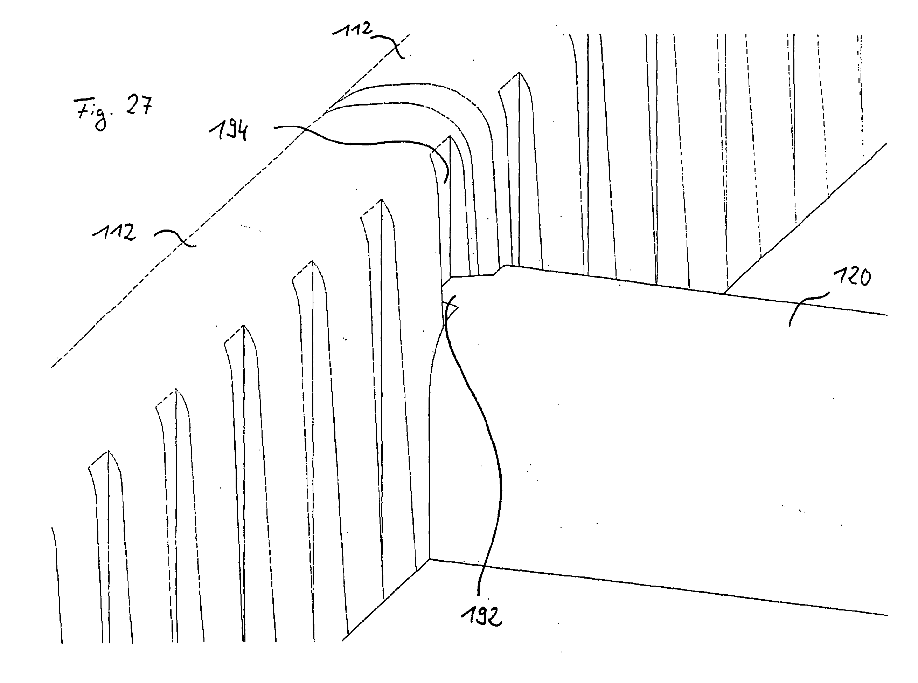

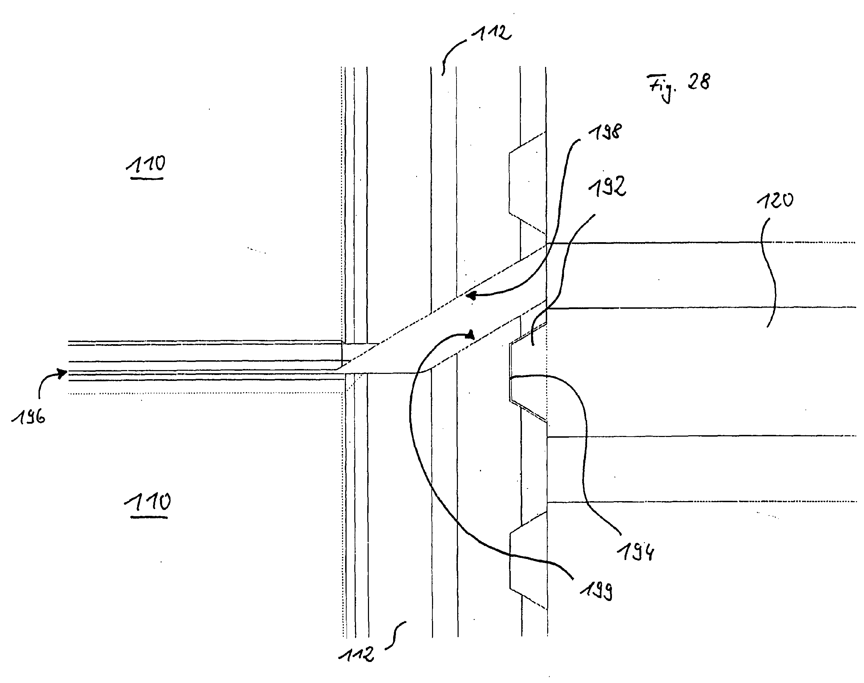

Die Figur 25 zeigt zwei hintereinander verlegte Laufgangplatten 110 gemäß Figur 24, die den mindestens einen Laufgang eines erfindungsgemäßen Stallbodens bilden. Die Stege 120 weisen an den Enden, mit denen sie zu den Seitenwänden 136 weisen, die Ausnehmungen 190 auf, in die Bolzen oder Schrauben und Dübel eingesetzt werden können, damit die Stege 120 auf einfache Weise auf dem Boden 140 fixiert werden können, wie in Figur 26 gezeigt. An den anderen Enden der Stege, die an die Erhebungen stoßen, sind Vorsprünge 192 vorgesehen, die in Ausnehmungen 194 der Erhebungen der Laufgangplatten 110 eingreifen, wie in den Figuren 27 und 28 gezeigt. Bei einer alternativen Ausführungsform weisen die Stege an den Enden, mit denen sie an die Erhebungen stoßen Ausnehmungen auf, in die Vorsprünge eingreifen, die an den Erhebungen als Befestigungseinrichtungen vorgesehen sind.

Die Figur 26 zeigt eine Perspektivansicht eines Endes eines Steges 120, das zu der Seitenwand 136 weist im Detail. An diesem Ende ist die Ausnehmung 190 angeordnet, in die eine Schraube, ein Bolzen oder ein anderes geeignetes Befestigungsmittel 196 eingeführt werden kann, mit dem der Steg 120 auf dem Boden 140 fixiert werden kann.

Die Figur 27 zeigt eine Perspektivansicht eines Endes eines Steges 120, das an die Erhebungen 112 der Laufgangplatten 110 stößt. An diesem Ende des Stegs 120 ist der Vorsprung 192 angeordnet, der in die Ausnehmung 194 der Erhebung 112 einer der Laufgangplatten 110 eingreift, wie in den Figuren 21 bis 25 gezeigt. Bei einer alternativen Ausführungsform weist der Steg 120 an dem Ende, mit dem er an die Erhebung stößt, eine Ausnehmung auf, in die ein Vorsprung, der an der Erhebung als Befestigungseinrichtung vorgesehen ist, eingreift.

Die Figur 28 zeigt eine Draufsicht eines Endes eines Steges 120, das an die Erhebungen 112 der Laufgangplatten 110 stößt gemäß Figur 27. An diesem Ende des Stegs 120 ist der Vorsprung 192 angeordnet, der in die Ausnehmung 194 der Erhebung 112 einer der Laufgangplatten 110 eingreift, wie in den Figuren 21 bis 25 und 27 gezeigt. Bei einer alternativen Ausführungsform weist der Steg 120 an dem Ende, mit dem er an die Erhebung stößt, eine Ausnehmung auf, in die ein Vorsprung, der an der Erhebung als Befestigungseinrichtung vorgesehen ist, eingreift. Besonders bevorzugt sind die Erhebungen der Laufgangplatten an den Seiten, an denen Sie zusammenstoßen, versetzt an den Laufgangplatten 110 angeordnet, sodass der Steg 120 mit dem Stoß 196 der Laufgangplatten 110 fluchten kann. Dazu sind die Erhebungen der Laufgangplatten vorzugsweise abgeschrägt, wie in Figur 28 mit den Pfeilen 198 und 199 gezeigt.

## Patentansprüche

1. Verfahren zur Herstellung eines Stallbodens mit mindestens einem Laufgang (1) und Liegemulden (2), umfassend die folgenden Schritte:
(a) Verlegen von Laufgangplatten (10; 110) zur Ausbildung des mindestens einen Laufgangs (1), wobei die Laufgangplatten jeweils eine Erhebung (12; 112) an einem Rand aufweisen,
(b) Verlegen von an die Erhebungen der Laufgangplatten stoßenden Stegen (20; 120), wobei die Erhebungen und die Stege Seitenwände (30; 32; 34) der Liegemulden bilden, die neben dem Laufgang angeordnet werden,
(c) Betonieren eines Bodens (40; 140) der Liegemulden und der den Erhebungen gegenüberliegenden Seitenwände (36; 136) der Liegemulden.

2. Verfahren nach Anspruch 1, wobei die Stege (20; 120) derart ausgebildet sind, dass sie nach dem Verlegen, im Grundriss gesehen, im Wesentlichen in einem rechten Winkel an die Erhebungen der Laufgangplatten (10; 110) stoßen.

3. Verfahren nach Anspruch 1 oder 2, wobei als Stege solche verwendet werden, die an ihrer dem Unterboden, auf den sie verlegt werden, zugewandten Seite Bewehrungen (22) aufweisen.

4. Verfahren nach einem der Ansprüche 1 bis 3, wobei zwischen und/oder unter benachbarten Stegen Stahlmatten (24) verlegt werden.

5. Verfahren nach einem der vorstehenden Ansprüche, wobei auf den Unterboden eine Betonschicht aufgebracht wird, die den Boden der Liegemulden zwischen den Stegen und den Erhebungen bildet.

6. Verfahren nach Anspruch 1, wobei der Schritt (c) vor dem Schritt (b) durchgeführt wird.

7. Verfahren nach Anspruch 6, wobei zum Betonieren der den Erhebungen gegenüberliegenden Seitenwände der Liegemulden Verschalungen (70; 80; 170) eingesetzt werden, die durch einen Abstandshalter (60; 120) fixiert werden, der in den Erhebungen vorgesehenen Befestigungseinrichtungen (14; 114; 194) befestigt wird.

8. Verfahren nach Anspruch 7, wobei als Abstandshalter eine Rohrstange (60) verwendet wird, die durch einen ersten Durchgang (71) einer ersten Verschalung (70) und durch einen zweiten Durchgang (82) einer zweiten Verschalung (80) geschoben wird.

9. Verfahren nach Anspruch 8, wobei ein weiteres Rohr (90) als weiterer Abstandshalter zwischen der ersten (70) und zweiten Verschalung (80) über die Rohrstange (60) geschoben wird.

10. Verfahren nach einem der Ansprüche 1, 2 oder 5, wobei nach dem Schritt (a) der Boden (140) der Liegemulden betoniert wird, dann der Schritt (b) durchgeführt wird und danach die den Erhebungen gegenüberliegenden Seitenwände (136) der Liegemulden betoniert werden.

11. Verfahren nach Anspruch 10, wobei die Stege (120) an den Enden, mit denen sie nach dem Verlegen an die Erhebungen (112) stoßen, Vorsprünge (192) aufweisen, die in Ausnehmungen (194) eingreifen, die in den Erhebungen (112) vorgesehen sind.

12. Verfahren nach einem der vorstehenden Ansprüche, wobei die Laufgangplatten (10; 110) an den die Erhebungen (12; 112) aufweisenden Rändern Bewehrungen (26) aufweisen, die nach dem Betonieren des Bodens (40; 140) der Liegemulden in diesen hineinragen.

13. Verfahren nach einem der vorstehenden Ansprüche, wobei die Laufgangplatten (10; 110) an den die Erhebungen (112) aufweisenden Rändern Ausnehmungen (16; 194) aufweisen, in die beim Betonieren des Bodens (40; 140) der Liegemulden Beton eindringt.

14. Betonfertigteilesystem für einen Stallboden, umfassend:
(A) Laufgangplatten (10; 110) aus Beton für einen Laufgang, wobei die Laufgangplatten jeweils eine Erhebung (12; 112) an einem Rand aufweisen, und
(B) Stege (20; 120), die zusammen mit den Erhebungen (12; 112), an die sie nach einem Verlegen stoßen, Seitenwände von Liegemulden für Tiere bilden.

15. Betonfertigteilesystem nach Anspruch 14, wobei die Stege (20; 120) derart ausgebildet sind, dass sie nach dem Verlegen, im Grundriss gesehen, im Wesentlichen in einem rechten Winkel an die Erhebungen der Laufgangplatten (10; 110) stoßen.

16. Betonfertigteilesystem nach Anspruch 14 oder 15, wobei die Stege (20) an ihrer dem Unterboden, auf den sie verlegt werden, zugewandten Seite Bewehrungen (22) aufweisen.

17. Betonfertigteilesystem nach Anspruch 14, wobei die Erhebungen (12) Befestigungseinrichtungen (14; 114) aufweisen, an denen Abstandshalter (60; 120) für Verschalungen (70; 80) befestigbar sind.

18. Betonfertigteilesystem nach Anspruch 17, wobei die Stege (20; 120) an den Befestigungseinrichtungen (14, 114) befestigbar sind.

19. Betonfertigteilesystem nach Anspruch 18, wobei die Stege (20; 120) zusätzlich an den den Erhebungen gegenüberliegenden Seitenwänden der Liegemulden an weiteren Befestigungseinrichtungen befestigbar sind.

20. Betonfertigteilesystem nach Anspruch 18 oder 19, wobei die Stege (120) an den Enden, mit denen sie nach dem Verlegen an die Erhebungen stoßen, Vorsprünge (192) aufweisen.

21. Betonfertigteilesystem nach einem der vorstehenden Ansprüche, wobei die Erhebungen Ausnehmungen (194) aufweisen, insbesondere zur Aufnahme der Vorsprünge (192) der Stege (120).

22. Betonfertigteilesystem nach einem der vorstehenden Ansprüche, wobei die Laufgangplatten (10; 110) an den die Erhebungen (12; 112) aufweisenden Rändern Bewehrungen (26) aufweisen.

23. Betonfertigteilesystem nach einem der vorstehenden Ansprüche, wobei die Laufgangplatten (10; 110) an den die Erhebungen (12; 112) aufweisenden Rändern Ausnehmungen (16; 194) aufweisen zur Aufnahme von Beton des Bodens (40) der Liegemulden.

24. Stallboden, erhältlich nach einem Verfahren nach einem der Ansprüche 1 bis 13.

25. Stallboden, umfassend das Betonfertigteilesystem nach einem der Ansprüche 14 bis 23.

26. Stall, umfassend einen Stallboden nach Anspruch 24 oder 25.

## Claims

1. Method of manufacturing a stable floor, comprising at least one gangway (1) and cubicles (2), comprising the following steps:
(a) laying gangway plates (10; 110) for forming the at least one gangway (1), wherein the gangway plates each have an elevation (12; 112) at a margin,
(b) laying bars (20; 120) abutting at the elevations of the gangway plates, wherein the elevations and the bars form side walls (30; 32; 34) of the cubicles arranged adjacent to the gangway,
(c) concreting a floor (40; 140) of the cubicles and the side walls (36; 136) of the cubicles opposing the elevations.

2. Method as claimed in claim 1, wherein the bars (20; 120) are formed such that after laying, seen in plan view, they abut substantially at a right angle to the elevations of the gangway plates (10; 10).

3. Method as claimed in claim 1 or 2, wherein bars are used that have reinforcements (22) on the side facing the under-floor on which they are laid.

4. Method as claimed in one of claims 1 to 3, wherein steel mats (24) are laid between and/or below adjacent bars.

5. Method as claimed in one of the preceding claims, wherein a concrete layer is applied onto the under-floor, said concrete layer forming the floor of the cubicles between the bars and the elevations.

6. Method as claimed in claim 1, wherein step (c) is carried out prior to step (b).

7. Method as claimed in claim 6, wherein boardings (70; 80; 170) are used for concreting the side walls of the cubicles opposing the elevations, said boardings being fixed by a spacer (60; 120) which is attached in the attachment means (14; 114; 194) provided in the elevations.

8. Method as claimed in claim 7, wherein a tubular rod (60) is used as a spacer, said tubular rod being move through a first passage (71) of a first boarding (70) and through a second passage (8) of a second boarding (80).

9. Method as claimed in claim 8, wherein a further tube (90) serving as a further spacer between the first (70) and the second boarding (80) is moved over the tubular rod (60).

10. Method as claimed in one of claims 1, 2 or 5, wherein according to step (a) the floor (140) of the cubicles is poured with concrete, subsequently step (b) is carried out and thereupon the side walls (136) of the cubicles opposing the elevations are poured with concrete.

11. Method as claimed in claim 10, wherein the bars (120) have projections (192) at the ends with which they abut to the elevations (112) after being laid, said projections engaging into recesses (194) which are provided in the elevations (112).

12. Method as claimed in one of the preceding claims, wherein the gangway plates (10; 110) have reinforcements (26) at the margins comprising the elevations (12; 112), said reinforcements projecting into the floor after concreting the floor 40; 140) of the cubicles.

13. Method as claimed in one of the preceding claims, wherein the gangway plates (10; 110) have recesses (16; 194) at the margins comprising the elevations (112), wherein concrete penetrates into the recesses during concreting of the floor (40; 140) of the cubicles.

14. Pre-fabricated concrete system for a stable floor, comprising
(A) gangway plates (10; 10) made of concrete for a gangway, wherein the gangway plates each have an elevation (12; 112) at a margin, and
(B) bars (20; 120), which together with the elevations (12; 120) at which they abut after laying form side walls of cubicles for animals.

15. Pre-fabricated concrete system as claimed in claim 4, wherein the bars (20; 120) are formed such that after laying, seen in plan view, they abut substantially at a right angle to the elevations of the gangway plates (10; 110).

16. Pre-fabricated concrete system as claimed in claim 14 or 15, wherein the bars (20) have reinforcements (22) at their side facing the under-floor on which they are laid.

17. Pre-fabricated concrete system as claimed in claim 14, wherein the elevations (12) comprise attachment means (14; 114) at which spacers (60; 120) for boardings (70; 80) can be attached.

18. Pre-fabricated concrete system as claimed in claim 17, wherein the bars (20; 120) can be attached to the attachment means (14, 114).

19. Pre-fabricated concrete system as claimed in claim 18, wherein the bars (20; 120) can additionally be attached to further attachment means at the side walls of the cubicles opposing the elevations.

20. Pre-fabricated concrete system as claimed in claim 18 or 19, wherein the bars (120) comprise projections (192) at the ends with which they abut at the elevations after laying.

21. Pre-fabricated concrete system as claimed in one of the preceding claims, wherein the elevations comprise elevations (194) particularly for receiving the projection (192) of the bars (120).

22. Pre-fabricated concrete system as claimed in one of the preceding claims, wherein the gangway plates (10, 110) have reinforcements (26) at the margins comprising the elevations (12; 112).

23. Pre-fabricated concrete system as claimed in one of the preceding claims, wherein the gangway plates (10, 110) have recesses (16; 194) at the margins comprising the elevations (12; 112) for receiving concrete of the floor (40) of the cubicles.

24. Stable floor that can be obtained according to a method as claimed in one of claims 1 to 13.

25. Stable floor, comprising the pre-fabricated concrete system as claimed in one of claims 4 to 23.

26. Stable, comprising a stable floor as claimed in one of claims 24 or 25.

## Revendications

1. Procédé pour fabriquer un sol d'étable avec au moins un couloir de service (1) et des litières (2), comprenant les étapes suivantes :
(a) pose de plaques de couloir de service (10; 110) pour former ledit au moins un couloir de service (1), les plaques de couloir de service présentant respectivement une surélévation (12; 112) sur un bord,
(b) pose de cloisonnements (20; 120) aboutant aux surélévations des plaques de couloir de service, les surélévations et les cloisonnements formant les parois latérales (30; 32; 34) des litières qui sont disposées à côté du couloir de service,
(c) bétonnage d'un sol (40; 140) des litières et des parois latérales (36; 136) des litières faisant face aux surélévations.

2. Procédé selon la revendication 1, dans lequel les cloisonnements (20; 120) sont configurés de telle manière qu'après la pose, vus en plan, ils aboutent essentiellement à angle droit aux surélévations des plaques de couloir de service (10; 110).

3. Procédé selon la revendication 1 ou 2, dans lequel on utilise comme cloisonnements des cloisonnements qui présentent des armatures (22) sur leur côté orienté vers le sol de fond sur lequel ils sont posés.

4. Procédé selon l'une des revendications 1 à 3, dans lequel des treillis en acier (24) sont posés entre et / ou sous des cloisonnements voisins.

5. Procédé selon l'une des revendications précédentes, dans lequel une couche de béton qui forme le sol des litières entre les cloisonnements et les surélévations est appliquée sur le sol de fond.

6. Procédé selon la revendication 1, dans lequel l'étape (c) est exécutée avant l'étape (b).

7. Procédé selon la revendication 6, dans lequel on utilise pour le bétonnage des parois latérales des litières faisant face aux surélévations des coffrages (70; 80; 170) qui sont fixés par un écarteur (60; 120) qui est fixé dans les dispositifs de fixation (14; 114; 194) prévus dans les surélévations.

8. Procédé selon la revendication 7, dans lequel on utilise comme écarteur une barre tubulaire (60) qui est poussée à travers un premier passage (71) d'un premier coffrage (70) et à travers un deuxième passage (82) d'un deuxième coffrage (80).

9. Procédé selon la revendication 8, dans lequel un tube supplémentaire (90) est poussé comme écarteur supplémentaire entre le premier (70) et le deuxième coffrage (80) par-dessus la barre tubulaire (60).

10. Procédé selon l'une des revendications 1, 2 ou 5, dans lequel après l'étape (a), le sol (140) des litières est bétonné, puis l'étape (b) est exécutée et ensuite les parois latérales (136) des litières faisant face aux surélévations sont bétonnées.

11. Procédé selon la revendication 10, dans lequel les cloisonnements (120) présentent, aux extrémités avec lesquelles ils aboutent aux surélévations (112) après la pose, des saillies (192) qui s'engagent dans des évidements (194) qui sont prévus sur les surélévations (112).

12. Procédé selon l'une des revendications précédentes, dans lequel les plaques de couloir de service (10; 110) présentent sur les bords présentant les surélévations (12; 112) des armatures (26) qui après le bétonnage du sol (40; 140) des litières font saillie dans celui-ci.

13. Procédé selon l'une des revendications précédentes, dans lequel les plaques de couloir de service (10; 110) présentent sur les bords présentant les surélévations (112) des évidements (16; 194) dans lesquels du béton pénètre lors du bétonnage du sol (40; 140) des litières.

14. Système d'éléments préfabriqués en béton pour un sol d'étable, comprenant :
(A) des plaques de couloir de service (10; 110) en béton pour un couloir de service, les plaques de couloir de service présentant respectivement une surélévation (12; 112) sur un bord, et
(B) des cloisonnements (20; 120) qui forment avec les surélévations (12; 112) auxquelles ils aboutent après une pose des parois latérales de litières pour des animaux.

15. Système d'éléments préfabriqués en béton selon la revendication 14, dans lequel les cloisonnements (20; 120) sont configurés de telle manière que, vus en plan, ils aboutent essentiellement à angle droit, après la pose, aux surélévations des plaques de couloir de service (10; 110).

16. Système d'éléments préfabriqués en béton selon la revendication 14 ou 15, dans lequel les cloisonnements (20) présentent des armatures (22) sur leur côté orienté vers le sol de fond sur lequel ils sont posés.

17. Système d'éléments préfabriqués en béton selon la revendication 14, dans lequel les surélévations (12) présentent des dispositifs de fixation (14, 114) auxquels des écarteurs (60; 120) pour des coffrages (70; 80) peuvent être fixés.

18. Système d'éléments préfabriqués en béton selon la revendication 17, dans lequel les cloisonnements (20; 120) peuvent être fixés aux dispositifs de fixation (14, 114).

19. Système d'éléments préfabriqués en béton selon la revendication 18, dans lequel les cloisonnements (20; 120) peuvent être fixés, outre aux parois latérales des litières faisant face aux surélévations, à d'autres dispositifs de fixation.

20. Système d'éléments préfabriqués en béton selon la revendication 18 ou 19, dans lequel les cloisonnements (120) présentent des saillies (192) aux extrémités avec lesquelles ils aboutent aux surélévations après la pose.

21. Système d'éléments préfabriqués en béton selon l'une des revendications précédentes, dans lequel les surélévations présentent des évidements (194), en particulier pour recevoir les saillies (192) des cloisonnements (120).

22. Système d'éléments préfabriqués en béton selon l'une des revendications précédentes, dans lequel les plaques de couloir de service (10; 110) présentent des armatures (26) sur les bords présentant les surélévations (12; 112).

23. Système d'éléments préfabriqués en béton selon l'une des revendications précédentes, dans lequel les plaques de couloir de service (10; 110) présentent sur les bords présentant les surélévations (12; 112) des évidements (16; 194) pour recevoir du béton du sol (40) des litières.

24. Sol d'étable pouvant être obtenu suivant un procédé selon l'une des revendications 1 à 13.

25. Sol d'étable comprenant le système d'éléments préfabriqués en béton selon l'une des revendications 14 à 23.

26. Étable comprenant un sol d'étable selon la revendication 24 ou 25.
